**Europäisches Patentamt**

(19) **European Patent Office**

**Office européen des brevets**

(11) Numéro de publication: **0 027 398**
**B1**

(12) # FASCICULE DE BREVET EUROPEEN

(45) Date de publication du fascicule du brevet:
**16.03.83**

(21) Numéro de dépôt: **80401360.5**

(22) Date de dépôt: **24.09.80**

(51) Int. Cl.³: **B 01 J 8/18,** B 01 D 46/34, B 01 D 53/06

(54) **Procédé et installation pour le traitement d'un gaz par mise en contact d'un courant de ce gaz avec des particules de matière solide.**

(30) Priorité: **08.10.79 FR 7924999**

(43) Date de publication de la demande:
**22.04.81 Bulletin 81/16**

(45) Mention de la délivrance du brevet:
**16.03.83 Bulletin 83/11**

(84) Etats contractants désignés:
**BE DE GB IT NL**

(56) Documents cités:
**FR-A-2 114 417**
**FR-A-2 387 073**
**GB-A-1 128 393**
**US-A-3 760 565**
**US-A-3 799 868**
**US-A-4 191 544**

(73) Titulaire: **AIR INDUSTRIE, 5-21 avenue Dubonnet, F-92401 Courbevoie (FR)**

(72) Inventeur: **Rebours, Albert, 9, rue du Bray, F-78400 Chatou (FR)**
Inventeur: **Remillieux, Jean, 98 ter B1 Avenue de Paris, F-78000 Versailles (FR)**

(74) Mandataire: **Picard, Jean-Claude Georges et al, Cabinet Plasseraud 84, rue d'Amsterdam, F-75009 Paris (FR)**

# Procédé et installation pour le traitement d'un gaz par mise en contact d'un courant de ce gaz avec des particules de matière solide.

La présente invention concerne un procédé et une installation pour le traitement d'un gaz par mise en contact d'un courant de ce gaz avec des particules de matière solide.

Par «traitement», on entend désigner d'une façon générale tous les traitements physiques ou chimiques auxquels on peut soumettre un gaz par sa mise en contact avec des particules de matière de traitement solide, que ledit gaz doit traverser. Il s'agira en général de traitements visant à éliminer ou à fixer, sur les particules, des éléments contenus dans ledit gaz, ou encore à obtenir, par combinaison chimique s'effectuant à la température du courant gazeux, un nouveau composé. Il peut encore s'agir d'effectuer un échange thermique entre un courant de gaz, par exemple chaud, et des particules de matière plus froide, le traitement en question impliquant alors un refroidissement du gaz, ou encore d'effectuer une adsorption sélective de composés gazeux sur des particules de matière.

L'invention concerne cependant plus particulièrement l'utilisation d'un tel procédé pour un traitement physique et notamment pour l'épuration de gaz à température élevée, transportant des particules de très faible granulométrie – aérosols, poussières fines ou encore des composés gazeux –, gaz qu'il s'agit donc de débarrasser de ces fines particules ou composés.

On sait qu'il existe déjà des procédés d'épuration d'un ganz contenant des poussières, selon lesquels un courant de ce gaz traverse un lit stationnaire de particules solides de plus forte granulométrie que celle des poussières, ce lit stationnaire servant de filtre.

Toutefois, la perte de charge subie par le courant de gaz est très importante, et le fond perméable de la chambre de fluidisation est colmaté rapidement par les poussières. En outre, l'encombrement des installations pour la mise en œuvre de tels procédés est considérable.

Le but de la présente invention est d'obtenir un procédé beaucoup plus avantageux, en faisant circuler le gaz à traiter de bas en haut et sensiblement verticalement dans au moins une colonne de contact, et ceci d'une manière telle que l'on puisse assurer une action stable et d'une efficacité optimale desdites particules de matière solide sur le courant de gaz à traiter.

A cet effet, un procédé conforme à l'invention est, sous sa forme la plus générale, caractérisé en ce que l'on crée, à l'aide d'un courant de gaz auxiliaire, au moins un lit fluidisé desdites particules de matière solide, on fait pénétrer ces particules dans la partie inférieure de la colonne par débordement dudit lit, et l'on introduit ledit courant de gaz à traiter dans la colonne de telle sorte qu'avant de les entraîner vers le haut, il entre en contact avec lesdites particules en débordement selon une direction transversale à celle qui est suivie par lesdites particules lors de leur pénétration dans la colonne.

Par rapport à l'utilisation d'un lit stationnaire, on voit qu'un avantage – essentiel – de l'invention est d'éviter toute charge excessive du courant de gaz à traiter, car il traverse alors un lit de particules de traitement qui ne sont plus stationaires, mais mobiles et fluidisées, lesquelles, après la mise en contact initiale, sont entraînées vers le haut par ledit courant; on augmente ainsi le temps de contact (il dépend de la hauteur de la colonne et de la vitesse du courant de gaz à traiter) et l'on réduit d'autre part les dimensions du lit fluidisé à ce qui est strictement nécessaire pour la mise en suspension des particules.

L'introduction par débordement, dans la partie inférieure de la colonne, des particules de matière solide de traitement, en outre, permet d'obtenir un débit stable et précis de ces particules, et donc d'assurer un traitement à efficacité constante du courant gazeux.

Enfin, le fait que le courant de gaz à traiter entre en contact avec lesdites particules en débordement selon une direction transversale à celle qui est suivie par lesdites particules lors de leur pénétration dans la colonne permet d'obtenir une excellente pénétration du gaz dans lesdites particules grâce à la turbulence ainsi obtenue, et une parfaite homogénéité de leur répartition, sans perturber le lit en profondeur.

Lorsqu'un procédé conforme à l'invention est destiné à être appliqué à l'épuration d'un courant de gaz à température élevée, contenant des poussières fines ou des composés gazeux, il peut encore être avantageusement caractérisé en ce que l'on utilise, pour la constitution du lit fluidisé de matière solide de traitement, des particules, dites auxiliaires, de granulométrie notablement plus élevée que celles des poussières fines éventuellement contenues dans ledit gaz, la matière constituant ces particules étant choisie de manière à retenir, par effet de diffusion, lesdites poussières fines ou composés gazeux, et en ce que l'on effectue, à la sortie de la ou des colonnes de contact, une séparation entre ledit courant de gaz d'une part, lesdites particules auxiliaires et les poussières fines ou composés gazeux fixés sur les particules auxiliaires d'autre part.

Le courant de gaz chaud à traiter pourra en particulier être constitué de fumées, par exemple de fumées sidérurgiques.

L'invention permet, dans le cas d'application défini ci-dessus, d'obtenir une diffusion très rapide de la fumée, en raison de la forte agitation thermique dans le gaz à traiter (mouvement Brownien agitant les particules sub-microniques) et une migration rapide des poussières vers les particules auxiliaires plus froides; après la réalisation du contact, les fines particules restent fixées sur les particules auxiliaires sous l'effet des forces de Van der Walls.

2

La migration rapide susmentionnée fait que la qualité du contact entre fines particules et particules auxiliaires ne dépend pas de leur vitesse relative, de sorte que la vitesse d'écoulement du courant de gaz à épurer peut être modérée (de l'ordre de 7 m/s); l'efficacité du contact est, comme cela ressort des explications données plus haut, surtout liée à l'importance du temps de contact et à l'homogénéité de la répartition des poussières fines dans ledit courant, conditions que, précisément, l'invention permet de réaliser.

Quant à la séparation effectuée à la sortie de la ou des colonnes de contact, elle ne pose pas de problème, étant donné qu'elle s'opère entre un courant de gaz et des particules auxiliaires chargées de fines poussières, donc des particules qui peuvent avoir la grosseur voulue, pour permettre une excellente sélectivité, c'est-à-dire un excellent rendement de séparation des fumées. On pourra donc utiliser tout séparateur classique adéquat, par exemple par centrifugation dans un ou plusieurs cyclones.

Bien entendu, le gaz utilisé pour la fluidisation des particules auxiliaires pourra être de l'air dépoussiéré à température ambiante, ou tout autre gaz propre, inerte ou non, éventuellement réchauffé préalablement, selon les applications.

Selon une autre caractéristique de l'invention, on peut encore prévoir qu'au moins une partie desdites particules auxiliaires de matière solide, ayant déjà parcouru la colonne de contact et récupérées après ladite séparation, sont recyclées, pour être mélangées aux particules auxiliaires de matière fraîche qui sont soumises à la fluidisation.

Ce retour vers l'amont d'au moins une partie des particules auxiliaires.déjà utilisées, pour être mélangées aux particules fraîches soumises à la fluidisation, peut s'effectuer bien entendu directement dans le lit de fluidisation en communication par débordement avec la partie inférieure de la colonne de contact. Le dosage de la partie recyclée peut être contrôlé par tout moyen de réglage adéquat, tout comme le débit de matière fraîche et le débit du gaz de fluidisation. Pour obtenir un débit constant de ces particules auxiliaires dans la colonne, il conviendra naturellement que le débit de particules non recyclées, c'est-à-dire évacuées après séparation, soit égal au débit de particules de matière fraîche amenées au lit de fluidisation.

En tout état de cause, la disposition susdéfinie, en permettant d'obtenir un grand nombre de passages des mêmes particules auxiliaires dans la colonne, avant leur évacuation, assure une utilisation maximale de chaque particule de matière auxiliaire, et permet donc de diminuer la dépense de matière fraîche.

Lorsque le procédé est appliqué à l'épuration d'un courant de gaz chargé de fines particules, issu d'une installation de traitement, de fabrication ou autre, dans laquelle on utilise ou on produit une matière déterminée, il peut encore avantageusement être caractérisé en ce que l'on utilise, pour les particules auxiliaires de matière fraîche, la même matière que la matière déterminée précitée et que celle qui constitue lesdites fines particules entraînées par le courant de gaz à traiter issu de l'installation, et en ce que l'on réintroduit dans celle-ci les particules auxiliaires obtenues après séparation, ainsi que les particules fines qui y sont fixées.

On peut ainsi récupérer immédiatement et utilement les particules de matière auxiliaire, pour les utiliser dans l'installation productrice de fumées.

La présente invention porte également sur différentes caractéristiques avantageuses d'une installation conçue spécialement pour la mise en œuvre du procédé qui vient d'être décrit. Ces caractéristiques, de même que celles du procédé, apparaîtront clairement à la lecture de la description qui suit d'exemples de réalisation d'une telle installation, et ceci avec référence aux figures du dessin annexé dans lequel:

– les figures 1 et 2 montrent schématiquement deux modes de réalisation de l'installation, la figure 2 n'étant que partielle; et

– la figure 3 montre le détail d'une variante du mode de réalisation de la figure 1.

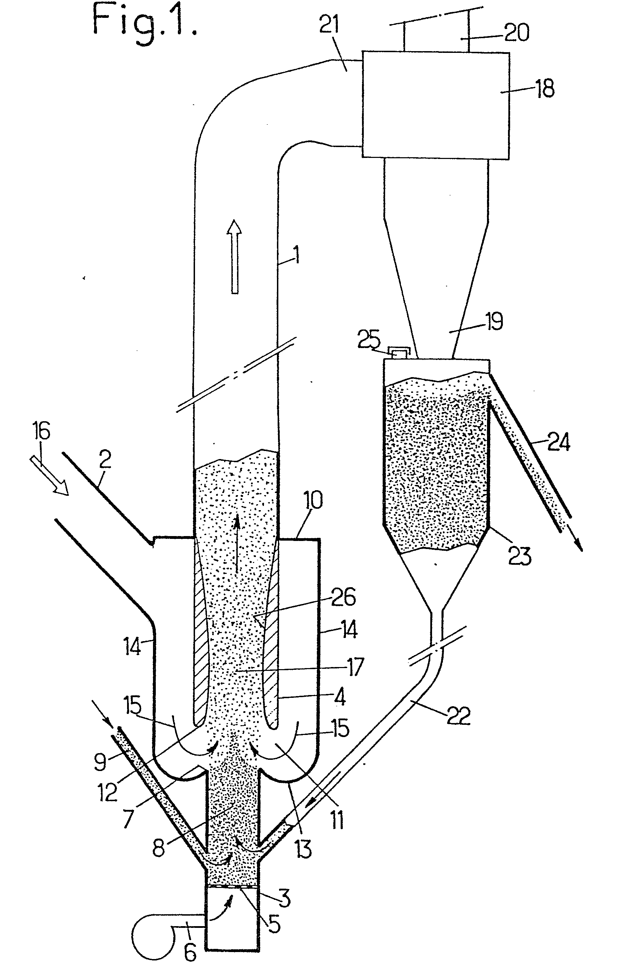

L'installation représentée schématiquement à la figure 1 comporte une colonne de contact généralement verticale 1. L'entrée pour le courant des gaz à traiter a été référencée en 2. L'installation comporte encore une enceinte de fluidisation 3 située au-dessous et dans le prolongement de la partie inférieure 4 de la colonne de contact 1. Cette enceinte est pourvue d'un fond perméable 5, par exemple en matière poreuse, d'une arrivée 6 de gaz de fludisation à débit réglable (gaz auxiliaire) débouchant dans l'enceinte 3 sous ledit fond perméable 5, d'un seuil 7 constitué par un bord de la partie 8 de l'enceinte située au-dessus du fond 5, laquelle partie 8 communique directement, selon un cheminement vertical, avec ladite partie inférieure 4 de la colonne, et enfin d'une entrée 9 de particules de matière solide (particules auxiliaires de traitement), lesquelles particules parviennent ainsi dans la partie 8 de l'enceinte de fluidisation 3, par exemple par simple gravité.

L'installation comporte en outre, autour de la partie inférieure 4 de la colonne une chambre annulaire de répartition 10, dans la partie supérieure de laquelle débouche l'entrée susmentionnée 2 du courant de gaz à traiter, cette chambre 10 présentant à sa partie inférieure un passage annulaire 11 entre au seuil 7 de l'enceinte de fluidisation 3 et l'extrémité inférieure 12 de la colonne de contact 1.

Le fond 13 de la chambre de répartition annulaire 10 est galbé de sorte à se présenter sous forme concave vers l'intérieur de la chambre, ce fond 13, ayant la forme au moins approximative d'une portion de tore, reliant ainsi les parois latérales 14 de la chambre au seuil 7, ce qui permet d'obtenir une perte de charge minimale dans cette zone de changement de direction du courant de gaz à traiter.

On voit bien que, grâce a cette disposition et comme le montrent les flèches 15, l'agencement des parties de l'installation qui sont en communication avec la partie inférieure 4 de la colonne 1 est tel que le courant de gaz à traiter, représenté par la flèche 16, au niveau de sa pénétration dans la partie inférieure 4 de la colonne et plus spécialement dans la partie inférieure de la zone active 17 de la colonne, est dirigé essentiellement transversalement à la direction (verticale et ascendante) suivie par les particules auxiliaires au niveau de leur pénétration par débordement (leur passage au-delà du seuil 7) dans la partie inférieure 4.

Ceci permet bien d'obtenir les effets et avantages spécifiés plus haut.

L'installation peut comprendre par ailleurs un séparateur à centrifugation 18, du genre cyclone ou analogue, comportant une sortie «matières» 19, une sortie «gaz épuré» 20 et une entrée 21 branchée à la sortie de la colonne de contact 1.

Dans le but également spécifié plus haut, l'installation peut encore comprendre un circuit de recyclage 22 entre ladite sortie «matières» 19 du séparateur 18 et l'enceinte de fluidisation 3.

Avantageusement, ce circuit 22 peut comporter une trémie-tampon 23 munie à sa partie supérieure d'une sortie d'évacuation de trop plein 24, de sorte qu'elle se trouve constamment remplie de particules auxiliaires de matière solide ayant déjà effectué un traitement du courant de gaz 16 dans la colonne de contact 1, c'est-à-dire sur lesquelles sont fixées de fines poussières ou des composés gazeux. Ces particules se mélangent ainsi aux particules de matière fraîche arrivant dans la partie supérieure 8 de l'enceinte de fluidisation.

A sa partie supérieure, la trémie-tampon 23 comporte un orifice obturable 25 qui en permet le remplissage préliminaire avant la mise en marche de l'installation.

C'est bien entendu à la sortie d'évacuation 24 que l'on pourra recueillir pour une réutilisation, éventuellement dans l'installation productrice de fumées, lesidtes particules auxiliaires chargées de poussières ou de composés gazeux. En tout cas, on voit que la trémie 23 permet d'interdire tous passages gazeux directs par le circuit de recyclage 22; elle sert également à assurer un volant de matière, ce qui permet, en cas de necessité, d'effectuer une modification des débits, et enfin, elle permet une évacuation automatique commode des particules auxiliaires usées.

Il est à noter qu'on pourrait effectuer également une mise en fluidisation dans cette trémie-tampon 23, afin de faciliter l'évacuation par le trop-plein.

Enfin, la colonne de contact 1 présente à sa partie inférieure 4 un rétrécissement de section 26 entre l'extrémité inférieure 12 de la colonne et sa partie supérieure verticale de section constante, ce rétrécissement constituant ainsi une sorte de venturi pour assurer le meilleur écoulement possible dans ladite partie inférieure 4 de la colonne.

Dans certaines applications, par exemple pour le dépoussiérage de gaz chauds, peut se présenter la nécessité d'un temps de contact relativement important (de l'ordre de 1 à 3 secondes), entre le courant de gaz à traiter et les particules auxiliaires, pour l'obtention d'un rendement convenable, ce qui peut conduire à une hauteur de colonne de traitement 1 prohibitive. Dans ce cas, l'installation pourra comprendre plusieurs colonnes de contact successives reliées par des tronçons de liaison verticaux descendants. Il sera alors avantageux de prévoir là encore une section rétrécie à l'entrée de chaque colonne de traitement, pour recréer une turbulence et annuler l'effet de centrifugation des particules dans les coudes ditués entre colonnes de contact et tronçons de liaison correspondants.

Plusieurs sections rétrécies successives pourraient d'ailleurs être également prévues dans une seule et même colonne de contact, de même pour recréer périodiquement une turbulence et améliorer ainsi le contact entre gaz et particules de traitement.

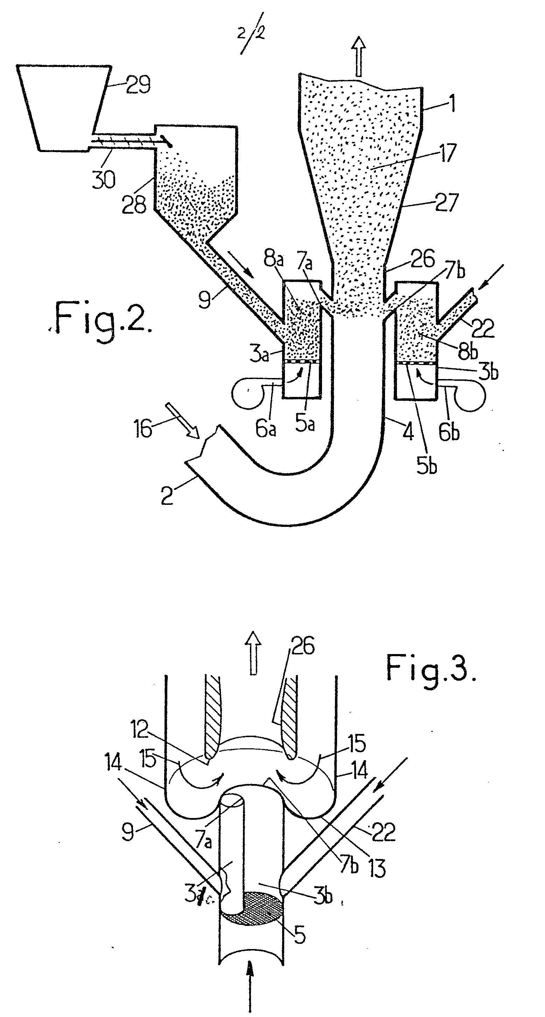

La figure 2 représente partiellement une installation de traitement également conforme à l'invention, selon une variante de réalisation.

Dans cette figure 2, les parties analogues à celles de la figure 1 ont été désignées par les mêmes références.

Selon cette variante, l'installation comporte deux enceintes de fluidisation 3a et 3b dont les seuils respectifs 7a et 7b débouchent latéralement dans la colonne de contact 1, au niveau d'une partie de section rétrécie 26 de celle-ci, précédant un élargissement 27, lequel relie ainsi cette partie de section rétrécie à la partie supérieure de section constante de la colonne. L'entrée 2 pour le courant de gaz à traiter 16 est en communication directe avec l'extrémité inférieure 4 de la colonne, de sorte que, là encore, conformément à une disposition essentielle du procédé selon l'invention, le courant de gaz à traiter pénètre dans la zone active 17 de la colonne, c'est-à-dire dans la partie qui contient les particules auxiliaires de traitement en suspension et en écoulement vers le haut, suivant une direction transversale à celle qui est suivie par les particules de traitement lors de leur propre pénétration, par débordement, dans ladite zone active 17.

On constate que, selon ces deux modes de réalisation, on a toujours un changement de direction important, soit du courant de gaz à traiter, soit des particules auxiliaires de contact, dans la zone où gaz et particules se rencontrent.

Comme spécifié plus haut, il en résulte une turbulence importante et d'excellentes conditions de contact entre les fines poussières ou composés gazeux contenus dans le courant de gaz à traiter et les particules de traitement auxiliaire plus grosses.

Dans la figure 2, les différents éléments associés aux enceintes de fluidisation sont référencés par les mêmes chiffres que dans la figure 1, mais avec l'indice a pour l'une des enceintes et l'indice b pour l'autre.

On comprendra que l'enceinte de fluidisation affectée de l'indice a est l'enceinte de réception des particules de matière fraîche, s'écoulant par gravité dans la conduite d'entrée 9, laquelle est reliée au fond d'une trémie intermédiaire 28 alimentée par une réservoir 29 et une vis doseuse 30, et que l'autre enceinte de fluidisation, affectée de l'indice b, est destinée à recevoir les particules recyclées après utilisation.

Une telle installation peut bien entendu comporter les autres éléments de l'installation ci-dessus décrite avec référence à la figure 1, y inclus les variantes.

A la figure 3, on a représenté schématiquement, en perspective et avec arrachement, une autre variante pouvant être appliquée au mode de réalisation de la figure 1 mais selon laquelle, comme dans l'installation décrite avec référence à la figure 2, on met en œuvre deux enceintes de fluidisation séparées: au-dessus d'un fond perméable 5, on a constitué à l'aide d'une section tubulaire une chambre de fluidisation 3c recevant des particules de matière fraîche par une conduite d'entrée 9, le reste de la section de passage de l'air de fluidisation à cet emplacement constituant ainsi une autre enceinte de fluidisation, 3d, de volume notablement plus important et dans laquelle les particules auxiliaires déjà utilisées et recyclées à la partie inférieure de la colonne de contact se déversent par le circuit de recyclage 22.

Les autres références de cette figure désignent les mêmes éléments que ceux de la figure 1. Les parties appelées dans ce qui précède «seuils» ont par ailleurs été référencées en 7a pour l'enceinte de fluidisation 3a et en 7b pour l'enceinte de fluidisation 3b.

On voit que les modes de réalisation des figures 2 et 3 empêchent une interaction entre les débits de particules de matière fraîche et de particules recyclées.

Dans les différents modes de réalisation, on utilisera de préférence de l'air à température ambiante comme gaz de fluidisation pour éviter de détériorer les fonds perméables des chambres de fluidisation, ceci étant en outre particulièrement favorable à une bonne diffusion des fines poussières sur les particules de traitement lorsque le courant de gaz à traiter est par exemple constitué de fumées à température élevée. On peut aussi utiliser un gaz, par exemple réactif, choisi pour ses propriétés particulières, et préalablement réchauffé à la température adéquate par un échangeur, non représenté.

Le mode de fluidisation représenté à la figure 2 peut être plus aisé à réaliser dans certains cas d'implantation. Enfin, on peut mentionner à titre purement indicatif que, pour le traitement de gaz contenant des particules submicroniques, on peut utiliser des particules de matière de traitement d'une granulométrie de l'ordre de 50 à 100 $\mu$.

Bien entendu, la matière utilisée pour les particules de traitement sera choisie en fonction de l'application envisagée pour l'installation: il pourra s'agir, pour ne citer qu'un exemple parmi beaucoup d'autres, de particules de minerai de fer pour le traitement de fumées sidérurgiques contenant de fines poussières d'oxyde de fer et de fer. Après utilisation, les particules de minerai chargées de fines poussières pourront ainsi être directement réutilisables dans l'installation de production.

**Revendications**

1. Procédé pour le traitement d'un gaz par mise en contact d'un courant de ce gaz avec des particules de matière solide, selon lequel on fait circuler le gaz à traiter de bas en haut et sensiblement verticalement dans au moins une colonne de contact, caractérisé en ce que l'on crée, à l'aide d'un courant de gaz auxiliaire, au moins un lit fluidisé desdites particules de matière solide, on fait pénétrer ces particules dans la partie inférieure de la colonne par débordement dudit lit, et l'on introduit ledit courant de gaz à traiter dans la colonne de telle sorte qu'avant de les entraîner vers le haut, il entre en contact avec lesdites particules en débordement selon une direction transversale à celle qui est suivie par lesdites particules lors de leur pénétration dans la colonne.

2. Procédé selon la revendication 1, appliqué à l'épuration d'un courant de gaz à température élevée, contenant des poussières fines ou des composés gazeux, caractérisé en ce que l'on utilise, pour la constitution du lit fluidisé de matière solide de traitement, des particules, dites auxiliaires, de granulométrie notablement plus élevée que celle des poussières fines éventuellement contenues dans ledit gaz, la matière constituant ces particules étant choisie de manière à retenir, par effet de diffusion, lesdites poussières fines ou composés gazeux, et en ce que l'on effectue, à la sortie de la ou des colonnes de contact, une séparation entre ledit courant de gaz d'une part, lesdites particules auxiliaires et les poussières fines ou composés gazeux fixés sur les particules auxiliaires d'autre part.

3. Procédé selon la revendication 2, caractérisé en ce qu'au moins une partie desdites particules auxiliaires de matière solide, ayant déjà parcouru la colonne de contact et récupérées après ladite séparation, sont recyclées, pour être mélangées aux particules auxiliaires de matière fraîche qui sont soumises à la fluidisation.

4. Procédé selon la revendication 2 ou 3, appliqué à l'épuration d'un courant de gaz chargé de fines particules, issu d'une installation de traitement, de fabrication ou autre, dans laquelle on utilise ou on produit une matière déterminée, caractérisé en ce que l'on utilise, pour les particules auxiliaires de matière fraîche, la même matière que la matière déterminée précitée et que celle qui constitue lesdites fines particules entraînées par le courant de gaz à traiter issu de l'installation, et en ce que l'on réintroduit dans celle-ci les particules auxiliaires obtenues après séparation, ainsi que les particules fines qui y sont fixées.

5. Procédé selon l'une quelconque des revendications 1 à 4, caractérisé en ce que ledit courant de gaz auxiliaire est constitué par un gaz propre à température ambiante et de débit ajustable.

6. Procédé selon l'une quelconque des revendications 1 à 4, caractérisé en ce que ledit courant de gaz auxiliaire est constitué par un gaz réactif préalablement porté à une température déterminée.

7. Installation pour la mise en œuvre d'un procédé conforme à l'une quelconque des revendications précédentes, comprenant au moins une colonne de contact (1) au moins approximativement verticale comprenant une entrée (2) pour le courant de gaz à traiter, en communication avec la partie inférieure de la colonne (de la première colonne si l'installation en comporte plusieurs en série), caractérisé en ce qu'elle comporte au moins une enceinte de fluidisation (3) pourvue d'un fond perméable (5), d'une arrivée de gaz de fluidisation (6) débouchant dans ladite enceinte sous ledit fond perméable (5), d'un seuil (7) constitué par un bord de la partie de l'enceinte (3) située au-dessus dudit fond (5), également en communication avec la partie inférieure de la colonne (1) et d'au moins une entrée (9) de particules de matière solide, débouchant dans ladite partie de l'enceinte (3) située au-dessus du fond (5), l'agencement des parties en communication avec la dite partie inférieure de la colonne (1) étant réalisé de telle manière que le courant de gaz à traiter, au niveau de sa pénétration dans la dite partie inférieure de la colonne (1), et plus spécialement dans la partie inférieure de la zone active de la colonne (1), soit dirigé essentiellement transversalement à la direction suivie par lesdites particules au niveau de leur pénétration par débordement dans ladite partie inférieure de la colonne (1).

8. Installation selon la revendication 7, destinée à l'épuration d'un courant de gaz à température élevée, contenant des poussières fines ou des composés gazeux, caractérisée en ce qu'elle comporte un séparateur (18) comportant une sortie «matières» (19) et une sortie «gaz épuré» (20), et dont l'entrée (21) est branchée à la sortie de la colonne de contact (de la dernière colonne si l'installation en comporte plusieurs en série).

9. Installation selon la revendication 8, caractérisée en ce qu'elle comporte un circuit de recyclage entre la sortie «matières» dudit séparateur et l'enceinte de fluidisation (une des enceintes si l'installation en comporte plusieurs en série).

10. Installation selon la revendication 9, caractérisée en ce que ledit circuit comprend une trémie-tampon (23) munie à sa partie supérieure d'une sortie d'évacuation de trop plein (24), cette trémie étant emplie de particules de matière solide.

11. Installation selon la revendication 10, caractérisée en ce que ladite trémie-tampon est pourvue de moyens de mise en fluidisation de la matière qui y est introduite.

12. Installation selon l'une quelconque des revendications 7 à 11, caractérisée en ce que la colonne de contact (au moins la première colonne si l'installation en comporte plusieurs en série) comprend au moins un rétrécissement de section (26) au niveau sus-mentionné de pénétration du courant de gaz à traiter et de pénétration des particules dans sa partie inférieure, ce rétrécissement étant suivi vers le haut par un élargissement.

13. Installation selon l'une quelconque des revendications 7 à 12, caractérisée en ce qu'elle comprend une enceinte de fluidisation située dans le prolongement de la partie inférieure de la colonne de contact (de la première colonne si l'installation en comporte plusieurs en série), et une chambre de répartition (10) dans la partie supérieure de laquelle débouche l'entrée susmentionnée du courant de gaz à traiter, cette chambre présentant à sa partie inférieure un passage annulaire (11) entre le seuil de ladite enceinte et l'extrémité inférieure de ladite colonne.

14. Installation selon la revendication 13, caractérisée en ce que le fond (13) de ladite chambre de répartition est galbé de sorte à se présenter sous forme concave vers l'intérieur de la chambre, ce fond galbé reliant les parois latérales de celle-ci et ledit seuil de l'enceinte de fluidisation.

15. Installation selon l'une quelconque des revendications 9 à 12, et selon la revendication 13 ou 14, caractérisée en ce que ladite enceinte de fluidisation est divisée verticalement en deux compartiments (3c, 3d), l'un étant branché sur une entrée de particules de matière solide fraîche et l'autre sur la sortie dudit circuit de recyclage.

16. Installation selon l'une quelconque des revendications 7 à 12, caractérisée en ce qu'elle comporte au moins une enceinte de fluidisation dont le seuil débouche latéralement dans la colonne, avantageusement au niveau d'un rétrécissement de section de celle-ci, lequel est suivi vers le haut par un élargissement, et en ce que ladite entrée pour le courant de gaz à traiter est en communication directe avec l'extrémité inférieure de la colonne.

17. Installation selon l'une quelconque des revendications 9 à 12 et selon la revendication 16, caractérisée en ce qu'elle comporte au moins deux enceintes de fluidisation (3a,3b), dont les seuils débouchent latéralement dans la colonne, avantageusement au niveau d'un rétrécissement de section de celle-ci, lequel est suivi vers le haut par un élargissement, une desdites enceintes étant branchée sur une entrée de particules de matière solide fraîche et une autre sur la sortie dudit circuit de recyclage.

**Patentansprüche**
1. Verfahren zur Behandlung eines Gases durch Kontaktierung eines Stromes dieses Gases mit Feststoffteilchen, bei dem man das zu behandelnde Gas von unten nach oben und etwa vertikal in mindestens einer Kontaktkolonne strömen lässt, dadurch gekennzeichnet, dass man mittels eines Hilfsgasstromes mindestens ein Wirbelbett der Feststoffteilchen bildet, dass man diese Teilchen durch Überlaufenlassen des Bettes in den unteren Teil der Kolonne eintreten lässt und dass man den Strom des zu behandelnden Gases in der Weise in die Kolonne einleitet, dass er mit den überlaufenden Teilchen, bevor sie nach oben mitgerissen werden, in einer Richtung, die quer zu derjenigen steht, in der die Teilchen in die Kolonne eintreten, in Kontakt kommt.

2. Verfahren nach Anspruch 1, angewandt zur Reinigung eines Gasstroms mit erhöhter Temperatur, der feinen Staub oder gasförmige Verbindungen aufweist, dadurch gekennzeichnet, dass man zur Bildung des Behandlungs-Feststoffteilchen-Wirbelbetts Hilfsteilchen mit wesentlich grösserer Korngrösse als der des eventuell in dem Gas enthaltenden feinen Staubes verwendet, wobei das Material dieser Teilchen derart gewählt wird, dass es den feinen Staub oder die gasförmigen Verbindungen durch Diffusionswirkung zurückhält, und dass man am Ausgang der Kontaktkolonne oder Kontaktkolonnen eine Trennung zwischen dem Gasstrom einerseits und den Hilfsteilchen, dem feinen Staub oder den gasförmigen Verbindungen, die an den Hilfsteilchen haften, andererseits bewirkt.

3. Verfahren nach Anspruch 2, dadurch gekennzeichnet, dass mindestens ein Teil der Feststoff-Hilfsteilchen, die die Kontaktkolonne durchlaufen haben und nach der Trennung wiedergewonnen wurden, zurückgeleitet wird, um mit den Hilfsteilchen aus frischem Material vermischt zu werden, die der Verwirbelung unterzogen wurden.

4. Verfahren nach Anspruch 1 oder 2, angewandt zur Reinigung eines mit feinen Teilchen beladenen Gastroms, der aus einer Behandlungs-, Herstellungs- oder anderen Anlage ausgestossen wird, in der man ein bestimmtes Material benutzt oder herstellt, dadurch gekennzeichnet, dass man für die Hilfsteilchen aus frischem Material das gleiche Material verwendet wie das bestimmte Material und wie dasjenige, das die feinen Teilchen bildet, die durch den Strom des zu behandelnden Gases, das aus der Einrichtung ausgestossen wird, mitgerissen werden, und dass man die nach der Trennung gewonnenen Hilfsteilchen wieder in diese einführt, ebenso wie die daran haftenden feinen Teilchen.

5. Verfahren nach einem der Ansprüche 1 bis 4, dadurch gekennzeichnet, dass der Hilfsgasstrom durch ein geeignetes Gas mit Umgebungstemperatur und einstellbarem Durchfluss gebildet wird.

6. Verfahren nach einem der Ansprüche 1 bis 4, dadurch gekennzeichnet, dass der Hilfsgasstrom durch ein reaktionsfähiges, zuvor auf eine vorbestimmte Temperatur erwärmtes Gas gebildet wird.

7. Anlage zur Durchführung des Verfahrens nach einem der vorhergehenden Ansprüche, mit mindestens einer wenigstens angenähert vertikalen Kontaktkolonne (1) mit einem Eingang (2) für den Strom des zu behandelnden Gases, der mit dem unteren Teil der Kolonne (der ersten Kolonne, wenn die Anlage mehrere Kolonnen in Reihe aufweist) in Verbindung steht, dadurch gekennzeichnet, dass sie aufweist: mindestens eine Wirbelkammer (3) mit einem durchlässigen Boden (5), einen Einlass (6) für Verwirbelungsgas, das durch den durchlässigen Boden (5) hindurch in die Wirbelkammer eintritt, und eine Schwelle (7), die durch einen Rand des oberhalb des Bodens (5) liegenden Teils der Wirbelkammer (3) gebildet ist, der sowohl mit dem unteren Teil der Kolonne (1) als auch mit mindestens einem Eingang (9) für Feststoffteilchen in Verbindung steht, der in diesen oberhalb des Bodens (5) liegenden Teil der Kammer (3) mündet, wobei die Versorgung der mit dem unteren Teil der Kolonne (1) in Verbindung stehenden Teile in der Weise bewirkt wird, dass der Strom des zu behandelnden Gases in Höhe seines Eintritts in den unteren Teil der Kolonne (1), insbesondere den unteren Teil der aktiven Zone der Kolonne (1), im wesentlichen quer zu derjenigen Richtung geleitet wird, in der sich die Teilchen in Höhe ihres Eintritts durch Überlaufen in den unteren Teil der Kolonne (1) bewegen.

8. Anlage nach Anspruch 7 zur Reinigung eines Gasstroms mit erhöhter Temperatur, der feinen Staub oder gasförmige Verbindungen aufweist, dadurch gekennzeichnet, dass sie einen Separator (18) mit einem Materialausgang (19) und einem Ausgang (20) für gereinigtes Gas aufweist, dessen Eingang (21) am Ausgang der Kontaktkolonne (der letzten Kolonne, wenn die Anlage mehrere Kolonnen in Reihe aufweist) angeschlossen ist.

9. Anlage nach Anspruch 8, dadurch gekennzeichnet, dass sie einen Rückführzweig zwischen dem Materialausgang des Separators und der Wirbelkammer (einer der Kammern, wenn die Anlage mehrere in Reihe aufweist) aufweist.

10. Anlage nach Anspruch 9, dadurch gekennzeichnet, dass der Rückführzweig einen Puffertrichter (23) aufweist, dessen oberer Teil mit einem Überlaufausgang (24) versehen ist, wobei der Trichter mit Feststoffteilchen gefüllt wird.

11. Anlage nach Anspruch 10, dadurch gekennzeichnet, dass der Puffertrichter mit Mitteln zur Verwirbelung des in ihn eingeleiteten Materials versehen ist.

12. Anlage nach einem der Ansprüche 7 bis 11, dadurch gekennzeichnet, dass die Kontaktkolonne (mindestens die erste Kolonne, wenn die Anlage mehrere Kolonnen in Reihe aufweist) mindestens eine Querschnittsverengung (26) in Höhe des Eintritts des zu behandelnden Gasstroms und des Eintritts der Teilchen in ihren unteren Teil aufweist, wobei auf diese Verengung nach oben eine Erweiterung folgt.

13. Anlage nach einem der Ansprüche 7 bis 12, dadurch gekennzeichnet, dass sie eine Wirbelkammer in der Verlängerung des unteren Teils der Kontaktkolonne (der ersten Kolonne, wenn die Anlage mehrere Kolonnen in Reihe enthält) und eine Verteilerkammer (10), in deren oberen Teil der Eingang für den zu behandelnden Gasstrom mündet, aufweist und dass die Verteilerkammer in ihrem unteren Teil eine Ringöffnung (11) zwischen der Schwelle der Wirbelkammer und dem unteren Ende der Kolonne aufweist.

14. Anlage nach Anspruch 13, dadurch gekennzeichnet, dass der Boden (13) der Verteilerkammer in der Weise ausgebaucht ist, dass er zum inneren dieser Kammer hin konkav ist, und dass dieser Boden ihre Seitenwände mit der Schwelle der Wirbelkammer verbindet.

15. Anlage nach einem der Ansprüche 9 bis 12 und 13 oder 14, dadurch gekennzeichnet, dass die Wirbelkammer vertikal in zwei Abteile (3c, 3d) unterteilt ist, von denen das eine an dem Eingang für die frischen Feststoffteilchen und das andere an dem Ausgang des Rückführzweiges angeschlossen ist.

16. Anlage nach einem der Ansprüche 7 bis 12, dadurch gekennzeichnet, dass sie mindestens eine Wirbelkammer aufweist, deren Schwelle seitlich in die Kolonne übergeht, vorzugsweise in Höhe einer Verengung des Kolonnenquerschnitts, auf die nach oben eine Erweiterung folgt, und dass der Eingang für den zu behandelnden Gasstrom direkt mit dem unteren Kolonnenende in Verbindung steht.

17. Anlage nach einem der Ansprüche 9 bis 12 und 16, dadurch gekennzeichnet, dass sie mindestens zwei Wirbelkammern (3a, 3b) aufweist, deren Schwellen seitlich in die Kolonne münden, vorzugsweise in Höhe einer Verengung des Kolonnenquerschnitts, auf die nach oben eine Erweiterung folgt, wobei eine dieser Wirbelkammern an einem Eingang für firsche Feststoffteilchen und eine andere am Ausgang des Rückführzweiges angeschlossen ist.

## Claims

1. Process for treatment of a gas by bringing a current of this gas into contact with particles of solid matter, whereby the gas under treatment is caused to travel upwards and effectively vertically within at least one contact column, characterised in that a current of an auxiliary gas is used to create at least one fluidised bed of the said solid particles, that these particles are made to penetrate into the lower part of the column by overflowing of the said fluidised bed, and that the said current of gas to be treated is ontroduced into the column in such a manner that before carrying them upwards, it comes into contact with the said overflow particles in a direction perpendicular to that followed by the said particles at the time of their entry into the column.

2. Process in accordance with claim 1, applied to the cleansing of a current of gas at a highg temperature, containing fine dust or gaseous compounds, characterised in that the fluidised bed of solid material used for the treatment is constituted of particles, known as auxiliary, having granulometry appreciably higher than that of the fine dust which may be contained in the said gas, the material constituting these particles being selected so as to retain, by diffusion, the said fine dust or gaseous compounds, and in that at the outlet of the contact column(s) a separation is carried out between the said current of gas on one hand, and the said auxiliary particles and the fine dust or gaseous compounds fixed on the auxiliary particles on the other hand.

3. Process as in claim 2, characterised in that at least part of the auxiliary particles of solid material, having already passed through the contact column and been recovered after the said separation, are recycled, in order to be mixed with the auxiliary particles of new material which are subjected to fluidisation.

4. Process as in claim 2 or 3, applied to the cleansing of a current of gas loaded with fine particles, issuing from an installation for treatment, for manufacture, or for some other purpose, which makes use of or which produces a specified material, characterised in that the auxiliary particles of new material are of the same material as the above-mentioned specified material and as that constituting the said fine particles carried along by the current of gas to be treated issuing from the installation, and in that the auxiliary particles obtained after separation, and the fine particles fixed on them, are reintroduced into this latter.

5. Process as in any of claims 1 to 4, characterised in that the said current of auxiliary gas consists of a suitable gas at ambient temperature and of adjustable rate of flow.

6. Process as in any of claims 1 to 4, characterised in that the said current of auxiliary gas consists of a respective gas previously heated to a specified temperature.

7. Installation for carrying out a process as in any one of the above claims, comprising at least one contact column (1) approximately vertical, comprising an inlet (2) for the current of gas to be treated, in communication with the lower part of the column (of the first column if the installation has a number of columns in series) characterised in that it carries at least one fluidisation region (3) provided with a permeable base (5), with an inlet for the fluidisation gas (6) opening into the said enclosure below the said permeable base (5), with a step (7) formed by an edge on the part of the region (3) situated above the said base (5), also in communication with the lower part of the column (1) and with at least one inlet (9) for particles of solid material, opening into the said part of the region (3) situated above the base (5), the disposition of the parts in communication with the said lower part of the column (1) being such that the current of gas to be treated, at the level where it penetrates into the said lower part of column (1), and more particularly into the lower part of the active zone of the column (1), is directed essentially transverse to the direction followed by the said particles at the level at which they penetrate by overflowing into the said lower part of the column (1).

8. Installation as in claim 7, intended for cleansing of a current of gas at a high temperature, containing fine dust or gaseous compounds, characterised in that it carries a separator (18) which has an outlet for «material» (19) and an outlet for «cleansed gas» (20) and with its inlet (21) connected to the outlet of the contact column (of the last column if the installation has more than one in series).

9. Installation as in claim 8, characterised in that it is provided with a recycling circuit between the «materials» outlet of the said separator and the fluidisation region (one of these regions if the installation includes more than one in series).

10. Installation as in claim 10, caracterised in that the said circuit includes a store which acts as an obstruction (23) provided with an overflow outlet on its upper part (24), this store being filled with particles of solid matter.

11. Installation as in claim 10, characterised in that the said store is provided with means of fluidisation of the material instroduced into it.

12. Installation as in any of the claims 7 to 11, characterised in that the contact column (at least the first column if the installation comprises mor than one in series) characterised in that the contact column has at least one narrowing of cross-section (26) at the above-mentioned level of penetration of the current of gas to be treated and of penetration of the particles into its lower part, this narrowing beinq followed above by a widening.

13. Installation as in any of the claims 7 to 12, characterised in that it includes a fluidisation region situated inside the prolongation of the lower part of the contact column (of the first column if the installation includes more than one in series), and a distribution chamber (10) in the upper part of which is located the above mentioned inlet of the current of gas to be treated, this chamber presenting at its lower part an annular passage (11) between the step of the said region and the lower end of the said column.

14. Installation as in claim 13, characterised in that the base (13) of the said distribution chamber is curved in such a manner as to be concave towards the chamber, this curved base connecting the side walls of this latter with the said step in the fluidisation region.

15. Installation as in any of the claims 9 to 12, and as in claim 13 or 14, characterised in that the said fluidisation region is divided vertically into two compartment (3c, 3d), one being connected to an inlet for new particles of solid material and the other to the said recycling circuit.

16. Installation as in one of the claims 7 to 12, characterised in that it includes at least one fluidation region with its step laterally placed inside the column, preferably at the level of a narrowing of the cross-section of this latter, which is followed in an upwards direction by a widening, and in that the said inlet for the current of gas to be treated is in direct communication with the lower end of the column.

17. Installation as in on of the claims 9 to 12 and claim 16, characterised in that it comprises at least two fluidisation regions (3a, 3b) with their entry steps laterally placed inside the column, preferably at the level of a narrowing of the cross-section of this latter, which is followed in any upwards direction by a widening, one of the said regions being connected to an inlet for new particles of solid material and one other to the outlet of the said recycling circuit.

# Fig.1.

Fig.2.

Fig.3.